(19) Europäisches Patentamt
European Patent Office
Office européen des brevets

(11) **EP 3 526 376 B1**

(12) **EUROPEAN PATENT SPECIFICATION**

(45) Date of publication and mention
of the grant of the patent:
**16.06.2021 Bulletin 2021/24**

(21) Application number: **17768482.6**

(22) Date of filing: **22.09.2017**

(51) Int Cl.:
**D01F 6/30** (2006.01)   **B33Y 10/00** (2015.01)
**C08F 210/06** (2006.01)   **C08L 23/12** (2006.01)
**C08L 23/10** (2006.01)

(86) International application number:
**PCT/EP2017/074124**

(87) International publication number:
**WO 2018/069025 (19.04.2018 Gazette 2018/16)**

(54) **USE OF PROPYLENE BASED FILAMENT IN 3D PRINTING**

VERWENDUNG VON PROPYLEN-BASIERTEM FILAMENT IM 3D-DRUCK

UTILISATION DE FILAMENT À BASE DE PROPYLÈNE DANS L'IMPRESSION 3D

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.10.2016 EP 16193232**

(43) Date of publication of application:
**21.08.2019 Bulletin 2019/34**

(73) Proprietor: **Basell Poliolefine Italia S.r.l.
20121 Milano (IT)**

(72) Inventors:
• **DE PALO, Roberto
44122 Ferrara (IT)**
• **CAVALIERI, Claudio
44122 Ferrara (IT)**

(74) Representative: **Sacco, Marco
Basell Poliolefine Italia S.r.l.
Intellectual Property
P.le Donegani, 12
44122 Ferrara (IT)**

(56) References cited:
**EP-A1- 3 067 389      CN-A- 103 992 560
US-A- 5 486 419**

• **HANS-JOACHIM RADUSCH ET AL: "Phase
behavior and mechanical properties of
heterophasic polypropylene-ethylene/propylene
copolymers systems", POLIMERY, vol. 50, no. 4,
1 January 2005 (2005-01-01), pages 279-285,
XP055276933,**

Printed by Jouve, 75001 PARIS (FR)

**Description**

FIELD OF THE INVENTION

The present disclosure relates to a filament comprising an heterophasic propylene ethylene copolymer to be used in an extrusion-based 3D printer.

BACKGROUND OF THE INVENTION

An extrusion-based 3D printer is used to build a 3D model from a digital representation of the 3D model in a layer-by-layer manner by extruding a flowable modeling material. A filament of the modeling material is extruded through an extrusion tip carried by an extrusion head, and is deposited as a sequence of roads on a substrate in an x-y plane. The extruded modeling material fuses to previously deposited modeling material, and solidifies upon a drop in temperature. The position of the extrusion head relative to the substrate is then incremented along a z-axis (perpendicular to the x-y plane), and the process is then repeated to form a 3D model resembling the digital representation. Movement of the extrusion head with respect to the substrate is performed under computer control, in accordance with build data that represents the 3D model. The build data is obtained by initially slicing the digital representation of the 3D model into multiple horizontally sliced layers. Then, for each sliced layer, the host computer generates a build path for depositing roads of modeling material to form the 3D model.

In the printing process the filament clearly plays an important role, changing the material of the filament the final mechanical and aesthetic properties of the finished object change. Usually in the art filament of polylactic acid (PLA) or acrylonitrile, butadiene, styrene (ABS) polymer or polyamides are used.

One of the most important properties of a filament is constant diameter (usually 1.75 mm or 3 mm) otherwise it is not possible to finely tune the amount of material in the printed object. This property is not easily achieved and depends on the characteristics of the polymer.

Furthermore the filament, once prepared, has to be printable, i.e. it has to be possible to achieve a good adhesion with the plate and among the layers.

CN 103992560 discloses a use of heterophasic propylene ethylene copolymer far 3D printing. The copolymer resin is composed of a propylene homopolymer and crosslinked ethylene-propylenediolefin copolymer rubber. This document did not explicitly indicate that the copolymer for 3D printing was provided in the form of filament.

EP 3 067 689 discloses a filament for a 3D printer produced by extrusion of a composition comprising a polymer matrix containing an olefin block copolymer wherein the polymer matrix has a Shore A hardness not higher than 90, a melt index (190 °C, 2.16 kg) of 1 to 30 g/10 min, and a melt index (120 °C, 10 kg) not higher than 3.0 g/10 min. In the view of MFI measurement conditions shows that the copolymer is based on ethylene).

POLIMERY vol 50, No 4, pages 279285 relates to the interactions between the phases, the morphology development and the resulting mechanical performance of the heterophasic polypropylene--ethylene/propylene copolymers (PP /EP) systems.

US 5 486 419 relates to a polyolefin yarn capable of increased resiliency and shrinkage comprising continuous strands of multiple monofilament fibers or staple fibers of propylene polymer material, optionally blended with polypropylene homopolymer.

Propylene based polymers have been proposed as polymers suitable for making filaments, however from the tests carried out by the applicant the propylene based filaments available on the market gave poor results in the print test.

Therefore there is the need for propylene based polymers that can be used as a filament in a 3D printer.

SUMMARY OF THE INVENTION

The applicant found a consumable filament for use in an extrusion-based additive manufacturing system comprising an heterophasic propylene ethylene copolymer having a xylene soluble content ranging from 15 wt% to 50 wt% and a melt flow rate MFR L (Melt Flow Rate according to ISO 1133, condition L, i.e. 230°C and 2.16 kg load) ranging from 0.5 to 100 g/10 min.

BRIEF DESCRIPTION OF THE DRAWINGS

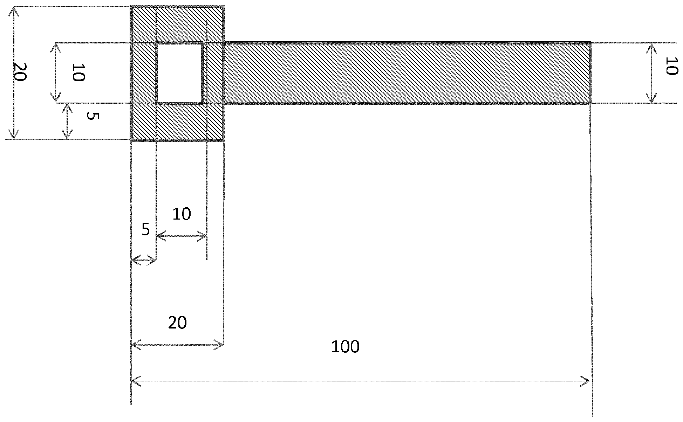

Figure 1 is the front view of the sample used in the print tests of the examples. The measure are given in mm, the sample once completely printed is 5 mm thick..

DETAILED DESCRIPTION OF THE INVENTION

The applicant found a consumable filament for use in an extrusion-based additive manufacturing system comprising an heterophasic propylene ethylene copolymer having a xylene soluble content ranging from 15 wt% to 50 wt% ; preferably from 20 wt% to 40 wt% more preferably from 22 wt% to 35 wt% and a melt flow rate MFR L (Melt Flow Rate according to ISO 1133, condition L, i.e. 230°C and 2.16 kg load) ranging from 0.5 to 100 g/10 min; preferably from 2.0 to 50.0 g/10 min; more preferably from 5.0 to 20.0 g/10 min.

The expression "heterophasic copolymer" as used in the instant invention indicates that the elastomeric propylene ethylene copolymer is (finely) dispersed in the matrix, i.e. in the propylene homo or copolymer. In other words the elastomeric propylene ethylene copolymer forms inclusions in the matrix. Thus the matrix contains (finely) dispersed inclusions being not part of the matrix and said inclusions contain the elastomeric propylene copolymer. The term "inclusion" according to this invention shall preferably indicate that the matrix and the inclusion form different phases within the heterophasic system, said inclusions are for instance visible by high resolution microscopy, like electron microscopy or scanning force microscopy.

Preferably the heterophasic propylene ethylene copolymer has an ethylene content ranging from 5 wt% and 30 wt%; more preferably from 8 wt% to 25 wt%; even more preferably from 10 wt% and 20 wt%.

The matrix of the heterophasic propylene ethylene content can be propylene homopolymer or propylene ethylene copolymer having an ethylene content up to 10 wt%; preferably up to 5 wt%; preferably the matrix is a propylene homopolymer.

The elastomeric phase is a propylene ethylene copolymer having an ethylene content ranging from 12 wt% to 80 wt%; preferably from 30 wt% to 70 wt%.

Preferably the intrinsic viscosity of the fraction soluble in xylene at 25°C ranges from 2.0 to 6.0 dl/g; more preferably from 2.5 to 5.0 dl/g; even more preferably from 3.1 dl/g to 4.5 dl/g

The term copolymer means that the polymer is formed by only two monomers, propylene and ethylene.

The term xylene soluble or xylene soluble fraction it is intended to be the fraction soluble in xylene at 25°C measured according to the procedure reported in the examples section.

heterophasic propylene ethylene copolymer used in the present disclosure can be extruded in a filament having a constant diameter, the diameter of the filament being that of one used in the art such as 1.75 mm or 3 mm. Other possible diameters can also be used. The variation from the nominal diameter is +/- 0.05 mm preferably +/- 0.03 mm.

When amorphous polymeric materials, such as acrylonitrile-butadiene-styrene (ABS) resins and polycarbonate resins are used they have little or no ordered arrangements of their polymer chains in their solid states. This reduces the effects of curling and plastic deformation in the resulting 3D model or support structure.

Crystalline or semicrystalline polymer exhibits superior mechanical properties but due to the crystallinity when used for building 3D model they show undesirable shrinkage effects both when the extruded road is deposited to form a portion of a layer of a 3D model and when the road is cooled. The shrinkage effects renders the crystalline or semicrystalline polymers not usable for the building of 3D object in a an extrusion-based additive manufacturing process.

The applicant found that heterophasic propylene ethylene copolymer of the present disclosure can be advantageously used for building a 3D model comprising semi crystalline polymers as shown by the amount of xylene soluble material.

The propylene ethylene copolymer of the present disclosure is available in the market. Examples of copolymers can be EP3080 or EP3307 sold by LyondellBasell,

The filament object of the present invention can additionally contain additives normally used in the art such as antioxidants, slipping agents, process stabilizers, antiacid and nucleants.

The filament can additionally contains fillers known in the art such as talc, calcium carbonate, wollastonite, glass fibers, glass spheres and carbon derived grades.

Furthermore the filament of the present invention can also contains wood powder, metallic powder marble powder and similar materials normally used for obtaining 3D object having particular aesthetic appearances or improved mechanics.

The following examples are given to illustrate and not to limit the present invention.

EXAMPLES

The data of the propylene polymer materials were obtained according to the following methods:

**Xylene-soluble fraction at 25°C**

The Xylene Soluble fraction was measured according to ISO 16152, 2005, but with the following deviations (between brackets is what is prescribed by the ISO 16152)

The solution volume is 250 ml (200 ml)

During the precipitation stage at 25°C for 30 min, the solution, for the final 10 minutes, is kept under agitation by a magnetic stirrer (30 min, without any stirring at all)

The final drying step is done under vacuum at 70°C (100 °C)

The content of said xylene-soluble fraction is expressed as a percentage of the original 2.5 grams and then, by difference (complementary to 100), the xylene unsoluble %

**Ethylene (C2) content**

**$^{13}$C NMR of propylene/ethylene copolymers**

$^{13}$C NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode" C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100 \ T_{\beta\beta}/S \qquad PPE = 100 \ T_{\beta\delta}/S \qquad EPE = 100 \ T_{\delta\delta}/S$$

$$PEP = 100 \ S_{\beta\beta}/S \qquad PEE = 100 \ S_{\beta\delta}/S \qquad EEE = 100 \ (0.25 \ S_{\gamma\delta}+0.5 \ S_{\delta\delta})/S$$

$$S = T_{\beta\beta} + T_{\beta\delta} + T_{\delta\delta} + S_{\beta\beta} + S_{\beta\delta} + 0.25 \ S_{\gamma\delta} + 0.5 \ S_{\delta\delta}$$

The molar percentage of ethylene content was evaluated using the following equation:

E% mol = 100 ∗ [PEP+PEE+EEE] The weight percentage of ethylene content was evaluated using the following equation:

$$E\% \ wt. = \frac{100 * E\% \ mol * MW_E}{E\% \ mol * MW_{E} + P\% \ mol * MW_P}$$

where P% mol is the molar percentage of propylene content, while $MW_E$ and $MW_P$ are the molecular weights of ethylene and propylene, respectively.

The product of reactivity ratio $r_1r_2$ was calculated according to Carman (C.J. Carman, R.A. Harrington and C.E. Wilkes, Macromolecules, 1977; 10, 536) as:

$$r_1 r_2 = 1 + \left(\frac{EEE + PEE}{PEP} + 1\right) - \left(\frac{P}{E} + 1\right)\left(\frac{EEE + PEE}{PEP} + 1\right)^{0.5}$$

The tacticity of Propylene sequences was calculated as mm content from the ratio of the PPP $mmT_{\beta\beta}$ (28.90-29.65 ppm) and the whole $T_{\beta\beta}$ (29.80-28.37 ppm)

**Melt flow rate (MFR)**

The melt flow rate MFR of the polymer was determined according to ISO 1133 (230°C, 2.16 Kg).

**The following polymers have been used**

PP1

Propylene homopolymer having an MFR 6,5 and a fraction soluble in xylene at 25°C of < 4%

PP2

Commercial filament of diameter 1.75 mm sold under the tradename PP REPRAP BLACK FILAMENT German RepRap PP Filament 600g, a random propylene ethylene copolymer having an ethylene content of 3 wt% an MFR of 2 dl/10 min and a fraction soluble in xylene at 25°C of 6.2 wt%.

PP3

Heterophasic propylene ethylene copolymer sold under the tradename HIFAX EP3080 having an ethylene content of 18 wt%, xylene soluble content of 32.0 wt% an MFR of 7.5 g/10 min and intrinsic viscosity of xylene soluble fraction IV of 3.5 dl/g.
Polymers PP1 and PP3 have been extruded to form a filament having 1.75 mm of diameter. In order to be able to extrude PP1 10 wt% of talc has been added.

**Print test**

The printer was a 3D Rostock delta printer. The printer conditions are the followings:

| Filament diameter | mm | 1,75 $\pm$0.03 |
|---|---|---|
| Nozzle diameter | mm | 0,4 |
| | | |
| Temperature first layer | °C | 245 |
| Temperature other layers | °C | 245 |
| | | 1 |
| Layer high | mm | 0,2 |
| Temperature plate | °C | 100 |
| | | |
| Plate material. | | polybutene sheet PB0300M |
| Infill | | 100% |
| printer speed | mm/min | 3600 |
| Speed first layer | | 60% |
| Speed other layers | | 100% |
| Speed infill | mm/min | 4.000 |

The sample to be printed is reported in Fig 1. For each filament 5 printer tests have been carried out, the print has been stopped when one side of the object is detached from the plane and thus the print of the object was no longer possible . The results are reported on table 1

Table 1

| material | height before detach (Z) (mm) (average measure) |
|---|---|
| PP1* | 0.8 |
| PP2* | 1.2 |

(continued)

| material | height before detach (Z) (mm) (average measure) |
|---|---|
| PP3 | full (5 mm) |
| * comparative | |

From table 1 clearly results that only PP3, that is the material according to the invention, can be used to fully print the sample.

**Claims**

1. The use of a consumable filament comprising an heterophasic propylene ethylene copolymer having a xylene soluble content measured according to ISO 16152, 2005 ranging from 15 wt% to 50 wt% and a melt flow rate MFR L (Melt Flow Rate according to ISO 1133, condition L, i.e. 230°C and 2.16 kg load) ranging from 0.5 to 100 g/10 min as consumable filament in an extrusion-based additive manufacturing system.

2. The use of a consumable filament according to claim 1 wherein in the heterophasic propylene ethylene copolymer the xylene soluble content ranges from 20 wt% to 40 wt%.

3. The use of a consumable filament according to claims 1 or 2 wherein in the heterophasic propylene ethylene copolymer the MFR L (Melt Flow Rate according to ISO 1133, condition L, i.e. 230°C and 2.16 kg load) ranges from 2.0 to 50.0 g/10 min.

4. The use of a consumable filament according to anyone of claims 1-3 wherein the heterophasic propylene ethylene copolymer has an ethylene content ranging from 5 wt% and 30 wt%;.

5. The use of a consumable filament according to anyone of claims 1-4 wherein in the heterophasic propylene ethylene copolymer the matrix is a propylene homopolymer or propylene ethylene copolymer having an ethylene content up to 10 wt%.

6. The use of a consumable filament according to claims 1 or 5 wherein in the heterophasic propylene ethylene copolymer the matrix is a propylene homopolymer.

7. The use of a consumable filament according to anyone of claims 1-6 wherein in the heterophasic propylene ethylene copolymer the intrinsic viscosity of the fraction soluble in xylene at 25°C ranges from 2.0 to 6.0 dl/g.

8. The use of a consumable filament according to anyone of claims 1-7 wherein in the heterophasic propylene ethylene copolymer the intrinsic viscosity of the fraction soluble in xylene at 25°C ranges from 2.5 to 5.0 dl/g.

9. A consumable filament as described in anyone of claims 1-8 having a diameter of 1.75 mm or 3 mm +/- 0.05 mm.

10. The use of a consumable filament of claim 9 for the production of 3D printed articles.

**Patentansprüche**

1. Verwendung eines verbrauchbaren Filaments, umfassend ein heterophasiges Propylen-Ethylen-Copolymer mit einem Gehalt an in Xylol löslichem Material, gemessen gemäß ISO 16152, 2005, im Bereich von 15 Gew.% bis 50 Gew.% und einer Schmelzflussrate MFR L (Schmelzflussrate gemäß ISO 1133, Bedingung L, d. h. 230 °C und 2,16 kg Last) im Bereich von 0,5 bis 100 g/10 min als verbrauchbares Filament in einem additiven Fertigungssystem auf Extrusionsbasis.

2. Verwendung eines verbrauchbaren Filaments nach Anspruch 1, wobei der Gehalt an in Xylol löslichem Material in dem heterophasigen Propylen-Ethylen-Copolymer im Bereich von 20 Gew.% bis 40 Gew.% liegt.

**3.** Verwendung eines verbrauchbaren Filaments nach Anspruch 1 oder 2, wobei die MFR L (Schmelzflussrate gemäß ISO 1133, Bedingung L, d. h. 230 °C und 2,16 kg Last) in dem heterophasigen Propylen-Ethylen-Copolymer im Bereich von 2,0 bis 50,0 g/10 min liegt.

**4.** Verwendung eines verbrauchbaren Filaments nach einem der Ansprüche 1 bis 3, wobei das heterophasige Propylen-Ethylen-Copolymer einen Ethylengehalt im Bereich von 5 Gew.% bis 30 Gew.% aufweist.

**5.** Verwendung eines verbrauchbaren Filaments nach einem der Ansprüche 1 bis 4, wobei das heterophasige Propylen-Ethylen-Copolymer der Matrix ein Propylenhomopolymer oder Propylen-Ethylen-Copolymer mit einem Ethylengehalt bis zu 10 Gew.% ist.

**6.** Verwendung eines verbrauchbaren Filaments nach den Ansprüchen 1 oder 5, wobei die Matrix in dem heterophasigen Propylen-Ethylen-Copolymer ein Propylenhomopolymer ist.

**7.** Verwendung eines verbrauchbaren Filaments nach einem der Ansprüche 1 bis 6, wobei die Grenzviskosität der in Xylol bei 25 °C löslichen Fraktion des heterophasigen Propylen-EthylenCopolymers im Bereich von 2,0 dl/g bis 6,0 dl/g liegt.

**8.** Verwendung eines verbrauchbaren Filaments nach einem der Ansprüche 1 bis 7, wobei die Grenzviskosität der in Xylol bei 25 °C löslichen Fraktion des heterophasigen Propylen-EthylenCopolymers im Bereich von 2,5 dl/g bis 5,0 dl/g liegt.

**9.** Verbrauchbares Filament gemäß einem der Ansprüche 1 bis 8 mit einem Durchmesser von 1,75 mm oder 3 mm +/- 0,05 mm.

**10.** Verwendung eines verbrauchbaren Filaments nach Anspruch 9 zur Produktion von 3D-gedruckten Gegenständen.

**Revendications**

**1.** Utilisation d'un filament fusible comprenant un copolymère hétérophasique de propylène-éthylène, présentant une teneur soluble dans le xylène, mesurée selon la norme ISO 16152, 2005, située dans la plage de 15% en poids à 50% en poids et un indice de fluidité à chaud MFR L (indice de fluidité à chaud selon la norme ISO 1133, condition L, c'est-à-dire à 230°C et sous une charge de 2,16 kg) situé dans la plage de 0,5 à 100 g/10 min en tant que filament fusible dans un système de fabrication additive basé sur l'extrusion.

**2.** Utilisation d'un filament fusible selon la revendication 1, où, dans le copolymère hétérophasique de propylène-éthylène, la teneur soluble dans le xylène est située dans la plage de 20% en poids à 40% en poids.

**3.** Utilisation d'un filament fusible selon les revendications 1 ou 2, où, dans le copolymère hétérophasique de propylène-éthylène, le MFR L (indice de fluidité à chaud selon la norme ISO 1133, condition L, c'est-à-dire à 230°C et sous une charge de 2,16 kg) est situé dans la plage de 2,0 à 50,0 g/10 min.

**4.** Utilisation d'un filament fusible selon l'une quelconque des revendications 1 à 3, le copolymère hétérophasique de propylène-éthylène présentant une teneur en éthylène située dans la plage de 5% en poids à 30% en poids.

**5.** Utilisation d'un filament fusible selon l'une quelconque des revendications 1 à 4, où, dans le copolymère hétérophasique de propylène-éthylène, la matrice est un homopolymère de propylène ou un copolymère de propylène-éthylène présentant une teneur en éthylène allant jusqu'à 10% en poids.

**6.** Utilisation d'un filament fusible selon les revendications 1 ou 5, où, dans le copolymère hétérophasique de propylène-éthylène, la matrice est un homopolymère de propylène.

**7.** Utilisation d'un filament fusible selon l'une quelconque des revendications 1 à 6, où, dans le copolymère hétérophasique de propylène-éthylène, la viscosité intrinsèque de la fraction soluble dans le xylène à 25°C est située dans la plage de 2,0 à 6,0 dl/g.

**8.** Utilisation d'un filament fusible selon l'une quelconque des revendications 1 à 7, où, dans le copolymère hétérophasique de propylène-éthylène, la viscosité intrinsèque de la fraction soluble dans le xylène à 25°C est située dans la plage de 2,5 à 5,0 dl/g.

9. Filament fusible tel que décrit selon l'une quelconque des revendications 1 à 8, présentant un diamètre de 1,75 mm ou de 3 mm +/-0,05 mm.

10. Utilisation d'un filament fusible selon la revendication 9, pour la production d'articles imprimés en 3D.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103992560
- EP 3067689 A

- US 5486419 A

**Non-patent literature cited in the description**

- *POLIMERY,* vol. 50 (4), 279285
- **C. J. CARMAN ; R. A. HARRINGTON ; C. E. WILKES.** Monomer Sequence Distribution in Ethylene-Propylene Rubber Measured by 13C NMR. 3. Use of Reaction Probability Mode. *Macromolecules,* 1977, vol. 10, 536

- **M. KAKUGO ; Y. NAITO ; K. MIZUNUMA ; T. MIYATAKE.** Carbon-13 NMR determination of monomer sequence distribution in ethylene-propylene copolymers prepared with $\delta$-titanium trichloride-diethylaluminum chloride. *Macromolecules,* 1982, vol. 15, 1150
- **C.J. CARMAN ; R.A. HARRINGTON ; C.E. WILKES.** *Macromolecules,* 1977, vol. 10, 536